# EUROPÄISCHE PATENTSCHRIFT

(11) **EP 1 670 575 B1**
(45) Veröffentlichungstag und Bekanntmachung des Hinweises auf die Patenterteilung: **18.04.2007**
(21) Anmeldenummer: 04787008.4
(22) Anmeldetag: 24.09.2004
(51) Int. Cl.: B01J 2/00

(54) **VORRICHTUNG ZUM MISCHEN, TROCKNEN UND BESCHICHTEN VON PULVRIGEM, KÖRNIGEM ODER GEFORMTEM SCHÜTTGUT IN EINEM FLIESSBETT**
DEVICE FOR THE MIXING, DRYING AND COATING OF POWDERED, GRANULAR OR MOULDED BULK MATERIAL IN A FLUID BED AND METHOD FOR PRODUCTION OF SUPPORTED CATALYSTS WITH SUCH A DEVICE
DISPOSITIF POUR MELANGER, SECHER ET ENDUIRE DES PRODUITS EN VRAC PULVERULENTS, GRANULEUX OU MOULES DANS UN LIT FLUIDISE ET PROCEDE DE PRODUCTION DE CATALYSEURS SUPPORTES AU MOYEN D'UN DISPOSITIF DE CE TYPE

(30) Priorität: 26.09.2003 DE 10344845
(43) Veröffentlichungstag der Anmeldung: 21.06.2006
(73) Patentinhaber: BASF Aktiengesellschaft, 67056 Ludwigshafen (DE)
(72) Erfinder: NETO, Samuel, 68161 Mannheim (DE); RUMMEL, Wolfgang, 50931 Köln (DE); STORCK, Sebastian, 68167 Mannheim (DE); ZÜHLKE, Jürgen, 67346 Speyer (DE); ROSOWSKI, Frank, 68165 Mannheim (DE)
(74) Vertreter: Reitstötter - Kinzebach
(86) Internationale Anmeldenummer: PCT/EP2004/010748
(87) Internationale Veröffentlichungsnummer: WO 2005/030380

(56) Entgegenhaltungen:
- DE-A1- 4 006 935
- US-A- 4 740 390
- US-A1- 2003 178 514
- US-B1- 6 335 402

## Beschreibung

Die Erfindung betrifft eine Vorrichtung zum Mischen, Trocknen und Beschichten von pulvrigem, körnigem oder geformtem Schüttgut in einem Fließbett und ein Verfahren zur Herstellung von Trägerkatalysatoren unter Verwendung einer solchen Vorrichtung; insbesondere ein Verfahren zur Herstellung von Trägerkatalysatoren für Gasphasenoxidationen.

Eine Vielzahl von Carbonsäuren und/oder Carbonsäureanhydriden wird technisch durch die katalytische Gasphasenoxidation von aromatischen Kohlenwasserstoffen, wie Benzol, den Xylolen, Naphthalin, Toluol oder Durol, in Festbettreaktoren hergestellt. Man kann auf diese Weise z. B. Benzoesäure, Maleinsäureanhydrid, Phthalsäureanhydrid, Isophthalsäure, Terephthalsäure oder Pyromellithsäureanhydrid erhalten. Im Allgemeinen leitet man ein Gemisch aus einem sauerstoffhaltigen Gas und dem zu oxidierenden Ausgangsmaterial durch Rohre, in denen sich eine Schüttung eines Katalysators befindet. Zur Temperaturregelung sind die Rohre von einem Wärmeträgermedium, beispielsweise einer Salzschmelze, umgeben.

Als Katalysatoren haben sich für diese Oxidationsreaktionen so genannte Schalenkatalysatoren bewährt, bei denen die katalytisch aktive Masse schalenförmig auf einem inerten Trägermaterial, wie Steatit aufgebracht ist. Als katalytisch aktiver Bestandteil der katalytisch aktiven Masse dieser Schalenkatalysatoren dient im allgemeinen neben Titandioxid Vanadiumpentoxid. Des weiteren können in der katalytisch aktiven Masse in geringen Mengen eine Vielzahl anderer oxidischer Verbindungen enthalten sein, die als Promotoren die Aktivität und Selektivität des Katalysators beeinflussen.

Zur Herstellung derartiger Schalenkatalysatoren wird eine wässrige Suspension der Aktivmassenbestandteile und/oder deren Vorläuferverbindungen oder Quellen auf das Trägermaterial bei erhöhter Temperatur aufgesprüht, bis der gewünschte Aktivmassenanteil am Katalysatorgesamtgewicht erreicht ist. Hierzu eignen sich insbesondere sogenannte Wirbelschicht- bzw. Fließbettapparate. In diesen Vorrichtungen wird das Trägermaterial in einem aufsteigenden Gasstrom, insbesondere Luft, fluidisiert. Die Apparate bestehen meist aus einem konischen oder kugelförmigen Behälter, bei dem das fluidisierende Gas von unten oder von oben über ein Zentralrohr oder Tauchrohr eingeführt wird. Die Suspension wird über Düsen von oben, seitlich oder von unten in die Wirbelschicht eingesprüht.

In DE-A 8 72 928 wird eine Fließbettapparatur beschrieben, die aus einem zylindrischen Behälter mit einem sich verengenden Unterteil besteht, welches in einen kübelförmigen Abschnitt mündet. Der Behälter ist oben mit einem Deckel verschlossen, durch den ein Tauchrohr eintritt, welches bis in den Kübelabschnitt hineinragt. Im oberen Teil des Behälters wird das Tauchrohr von einer schirmförmigen Prallplatte umschlossen. Das Tauchrohr ist mit einem Mantelrohr größeren Durchmessers aber geringerer Länge umgeben, welches ebenfalls bis in den kübelförmigen Abschnitt des Behälters hineinragt, aber im Abstand zum Prallschirm endet. Im Abstand zum unteren Ende des Tauchrohres ist ebenfalls eine Prallplatte angebracht. In dieser Vorrichtung wird die durch das Tauchrohr eingeblasene Luft im Mantelrohr nach oben ausgeblasen und von dem Prallschirm nach außen umgelenkt. Das Schüttgut wird durch das sich verengende Unterteil des Behälters auf die untere Prallplatte bewegt und vom Luftstrom in das Mantelrohr mitgerissen. Nachteilig bei dieser Vorrichtung ist die nur mäßige Fluidisierung des Schüttguts und der damit verbundenen Gefahr einer Verstopfung der unteren Mündung des Mantelrohrs. Vor allem kann es aufgrund des geringen Abstands zwischen Mantelrohroberkante und Prallschirm zur Beschädigung und Zerkleinerung des Schüttguts kommen.

EP-A 1 03 894 beschreibt eine Fließbettapparatur bestehend aus einem rotationssymmetrischen Behälter mit nach unten abnehmendem Durchmesser, dessen Unterteil in eine Schüssel einmündet. Von oben her ragt axial ein Tauchrohr bis in die Schüssel hinab, so dass zwischen Tauchrohr und Schüsselwand ein enger Ringraum gebildet wird. Am oberen Drittel des Tauchrohrs ist ein Abweisschirm angeordnet. In dieser Fließbettapparatur reißt der aus dem Ringraum nach oben in den Behälter austretende Gasstrom das Gut rings um das Tauchrohr nach oben mit; das Gut wird vom Abweisschirm nach außen umgelenkt und gelangt längs der nach unten konvergierenden Innenwand des Behälterunterteils wieder in die Nähe der Schüssel, von wo aus das Gut erneut rings um das Tauchrohr nach oben mitgerissen wird. Daraus ergibt sich eine gleichmäßige Umwälzung des im Behälter enthaltenen Gutes. Diese Umwälzung nimmt bei ausreichender Strömungsgeschwindigkeit des Gases sogar die Form einer vollständigen Fluidisierung des Gutes an. Von Nachteil ist bei dieser Art der Fluidisierung, dass ein erheblicher Teil der Bewegungsenergie des Gasstromes für die Überwindung von Reibungskräften zwischen am Tauchrohr aufwärts steigendem Strom und seitlich einfließendem Schüttgut verwendet werden muss. Bei größeren Apparaten und Schütthöhen und bei stoßempfindlichem Gut, wie zum Beispiel Keramikringen, führt dies zu einem unerwünschtem Bruchanteil.

Eine Fließbettapparatur, welche diese Nachteile überwindet ist die in der in DE-A 40 06 935 beschrieben Vorrichtung mit den Merkmalen des Oberbegriffs des vorliegenden Anspruchs 1. Die bekannte Vorrichtung besteht aus einem kugelförmigen Behälter, der mit seinem Behälterunterteil in eine schüsselartige Vertiefung übergeht und einem Zentralrohr, das sich axial im Behälter nach unten erstreckt und in der Vertiefung endet, wobei innerhalb des Behälteroberteils ein ringförmiger Abweisschirm am Zentralrohr befestigt ist, und innerhalb des Behälterunterteils ein Leitring mit einem größeren Durchmesser als das Zentralrohr konzentrisch zum Zentralrohr so angeordnet ist, dass zwischen dem Übergang von dem Behälterunterteil zur schüsselartigen Vertiefung und dem Leitring ein erster ringförmiger Durchlass und zwischen dem Abweisschirm und dem Leitring ein zweiter ringförmiger Durchlass freigelassen wird. Der Durchmesser des Leitrings ist größer als oder gleich wie der Durchmesser der schüsselartigen Vertiefung. Ferner ist der Durchmesser des Leitrings kleiner oder gleich der lichten Höhe des ersten Durchlasses. Die Höhe des Leitrings selbst beträgt liegt im Bereich von 1/3 bis 2/3 der Gesamthöhe zwischen Unterseite des ersten Durchlasses und Oberseite des zweiten Durchlasses. Mit dieser Vorrichtung wird erreicht, dass das fluidisierte Gut mit dem durch das Zentralrohr eingeführten Gasstrahl zwischen dem Leitring und dem Zentralrohr aufwärts gefördert wird, bis es vom Abweisschirm umgelenkt wird, während das Schüttgut, das sich im Raum zwischen Leitring und Behälterwand befindet, durch die Schwerkraft in den ersten ringförmigen Durchlass zwischen dem unteren Rand des Leitrings und dem Behälterunterteil wandert, um dort erneut durch den Gasstrom fluidisiert und aufwärts gefördert zu werden. Durch die Trennung des abwärts bewegten Schüttguts vom fluidisierten, aufwärts geförderten Partikelanteil mittels des Leitrings innerhalb des Behälterunterteils wird eine wesentliche Verminderung der Reib- und Stosskräfte der Partikel erreicht; mit dem Ergebnis, dass die Umwälzung des Gutes bei ansonsten identischer Vorgehensweise, mit dem Leitring wesentlich schneller, gründlicher und schonender erfolgt als ohne Leitring. Somit kann schon mit reduzierter Fördergasmenge, unter wesentlich schonenderen Bedingungen, eine ausreichende Fluidisierung mit geringeren Bruchanteilen erreicht werden, im Vergleich mit Vorrichtungen, die keinen Leitring enthalten.

Nachteilig an der Fließbettapparatur nach der DE-A 40 06 935 ist, dass sich im Betrieb ein Belag auf dem Zentralrohr und anderen Bauteilen abscheidet, so dass nach sieben bis acht Beschichtungsprozessen eine aufwändige Reinigung des Behälterinnenraums erforderlich ist. Ferner können mit der bekannten Vorrichtung Trägermaterialien, insbesondere Ringe, mit Abmessungen von mehr als 7 mm Außendurchmesser nicht gleichmäßig beschichtet werden.

Der Erfindung liegt daher das technische Problem zugrunde, eine Fließbettapparatur zum Mischen, Trocknen und Beschichten von pulverigem, körnigem oder geformtem Schüttgut in einem Fließbett, insbesondere von Katalysatorträgern bereitzustellen, die längere Standzeiten ermöglicht und mit der auch größere Katalysatorträger gleichmäßig beschichtet werden können. Die Erfindung soll auch ein Verfahren zur Herstellung von Trägerkatalysatoren unter Verwendung einer solchen Vorrichtung bereitstellen.

Gelöst wird dieses technische Problem die Vorrichtung gemäß vorliegendem Anspruch 1. Vorteilhafte Weiterbildungen sind in den abhängigen Ansprüche offenbart.

Gegenstand der Erfindung ist eine Vorrichtung zum Mischen, Trocknen und Beschichten von pulverigem, körnigem oder geformtem Schüttgut in einem Fließbett mit einem Behälter zu Aufnahme des Schüttguts, wobei in einem unteren Bereich des Behälters eine schüsselartige Vertiefung vorgesehen ist, einem Zentralrohr zur Zuführung eines Gases, wobei das Zentralrohr in einem oberen Bereich des Behälters in den Behälter eintritt, sich in dem Behälter im wesentlichen axial nach unten erstreckt und in die Vertiefung mündet, einem im wesentlichen ringförmigen Abweisschirm, der in dem oberen Bereich des Behälters an dem Zentralrohr befestigt ist, einem in dem unteren Bereich des Behälters angeordneten Leitring, der das Zentralrohr auf einem Teil seiner Länge im wesentlich konzentrisch mit einem Abstand L so umgibt, dass zwischen der Wand des Behälters am oberen Rand der Vertiefung und dem unteren Ende des Leitrings ein erster Durchlass und zwischen dem Abweisschirm und dem oberen Rand des Leitrings ein zweiter Durchlass gebildet wird, und Mitteln zum Einleiten eines Fluids, vorzugsweise einer Suspension, in den Behälter, wobei die Suspension bevorzugt einen katalytisch wirksames Material oder dessen Vorläufer oder Quellen enthält. Die erfindungsgemäße Vorrichtung ist dadurch gekennzeichnet, dass die Außenwand des Zentralrohrs, vorzugsweise der Bereich Außenwand unterhalb des Abweisschirms, zumindest teilweise mit einer haftvermindernden Beschichtung versehen ist.

Durch Beschichtung der Außenwand des Zentralrohrs wird die Belagsbildung drastisch vermindert. Erst nach ca. 15 Beschichtungsprozessen kommt es zu merklichen Störung der Luftströmung im Behälter, die eine Reinigung erforderlich machen. Bei den üblichen Beschichtungsprozessen bedeutet dies, dass eine Reinigung nur einmal am Tag statt wie bisher mindestens zweimal am Tag erforderlich ist. Die haftvermindernde Beschichtung vereinfacht außerdem die Reinigung des Behälterinnenraums. Insgesamt erlaubt die erfindungsgemäße Vorrichtung eine Erhöhung der täglichen Produktionskapazität um mehr als 20%.

Üblicherweise ist der Leitring über Streben an dem Zentralrohr befestigt. In diesem Fall sind bevorzugt auch die Streben mit der haftvermindernden Beschichtung versehen.

Vorzugsweise sind auch die Unterseite des Abweisschirms und/oder der Innenmantel des Leitrings mit der haftvermindernden Beschichtung versehen, um Belagsbildung und die damit einhergehende Beeinträchtigung der Luftströmung weiter zu verringern.

Es können beliebige, bei den Betriebsbedingungen der Vorrichtung inerte haftvermindernde Beschichtungen verwendet werden. Vorzugsweise ist haftvermindernde Beschichtung ein Polymerisat eines fluorierten, vorzugsweise perfluorierten, ethylenisch ungesättigten Kohlenwasserstoffs ist, beispielsweise eine Fluorpolymer wie Polytetrafluorethylen. Es können aber auch Keramikmaterialien oder Verbundwerkstoffe verwendet werden, die mit Keramik-, Edelstahl- oder Kunststoffsieblinien gefüllt sind, und einen zusätzlich zur haftvermindernden Wirkung einen hohen Abrasionsschutz gewährleisten.

Gemäß einer bevorzugten Ausführungsform der erfindungsgemäßen Vorrichtung ist der Abstand zwischen der Wand des Zentralrohrs und der Wand des Leitrings größer als die lichte Höhe des ersten Durchlasses. Mit einer solchen Anordnung können auch größere Trägermaterialien, beispielsweise mit Durchmessern von 8 mm und mehr, gleichmäßig sowohl mit einer als auch mit zwei Schichten beschichtet werden. Ferner kann das Trägermaterial mit höherer Dichte beschichtet werden.

Vorzugsweise beträgt der Abstand zwischen der Wand des Zentralrohrs und der Wand des Leitrings weniger als 2/3 des Durchmessers des Abweisschirms. Besonders bevorzugt beträgt dieser Durchmesser weniger als die Hälfte des Durchmessers des Abweisschirms.

Vorteilhaft passt man den Abstand zwischen der Wand des Zentralrohrs und der Wand des Leitrings dabei den Abmessungen des Schüttguts an, wobei man bei größeren Schüttgutpartikeln eine entsprechend größeren Abstand innerhalb der oben angegebenen Grenzen wählt.

Die Höhe des Leitrings liegt bevorzugt im Bereich von einem Drittel und zwei Dritteln des Abstands zwischen dem oberen Rand der Vertiefung und der Behältermittelachse.

Der Außendurchmesser des Leitrings entspricht vorzugsweise im wesentlichen dem halben Behälterdurchmesser, was eine effektive Umwälzung des Schüttguts, also beispielsweise des Trägermaterials, gewährleistet.

Die Erfindung betrifft auch ein Verfahren zur Herstellung von Trägerkatalysatoren, wobei man die Katalysatorträger in der erfindungsgemäßen Vorrichtung fluidisiert und durch Besprühen mit einer katalysatorhaltigen Suspension beschichtet. Vorzugsweise stellt man mit dem erfindungsgemäßen Verfahren Trägerkatalysatoren für die Synthese von Benzoesäure, Maleinsäureanhydrid, Phthalsäureanhydrid, Isophthalsäure, Terephthalsäure oder Pyromellithsäureanhydrid durch Gasphasenoxidation her.

Die Erfindung wird im Folgenden unter Bezugnahme auf eine in der beigefügten Zeichnung dargestellte Ausführungsform der erfindungsgemäßen Vorrichtung näher erläutert.

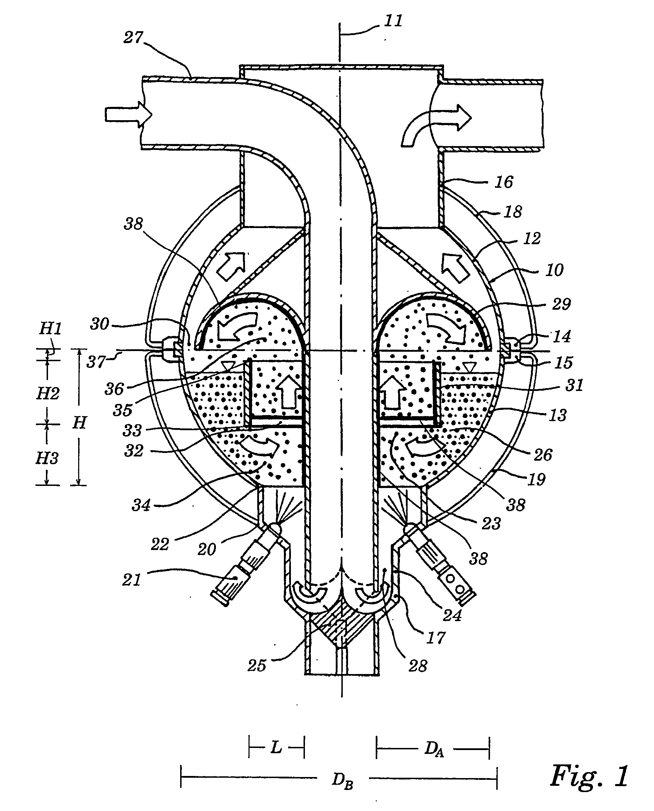

In der Zeichnung zeigt die Fig. 1 einen schematischen Längsschnitt durch eine erfindungsgemäße Fließbettapparatur zum Beschichten von Katalysatorträgern.

Die Vorrichtung zum Beschichten von Katalysatorträgern in einem Fließbett umfasst einen kugelförmigen Behälter 10 mit einem Innendurchmesser D_{B} und ist in Bezug auf eine senkrechte Behälterachse 11 rotationssymmetrisch. Der Behälter 10 weist ein Behälteroberteil 12 und ein Behälterunterteil 13 auf, die im dargestellten Beispiel jeweils die Form einer Kugelschalenzone haben, und vorzugsweise aus Glas oder Stahl hergestellt sind. Die beiden Behälterteile 12, 13 sind an Ihrem Umfang über Flansche 14, 15 miteinander verbunden.

An das Behälteroberteil 12 schließt sich nach oben hin ein Behälteraufsatz 16 an, während das Behälterunterteil 13 nach unten hin in eine schüsselartige Vertiefung 17 übergeht. An dem Behälteraufsatz 16 und an der Vertiefung 17 sind je zwei Bügel 18 und 19 befestigt, die miteinander verspannt sind, beispielsweise durch übliche Übertotpunktverschlüsse oder ähnliche Schnellverschlüsse, die es ermöglichen, die Behälterteile 12, 13 zum Reinigen rasch auseinanderzunehmen. Dabei bleibt üblicherweise entweder das Behälteroberteil 12 über den Behälteraufsatz 16, oder das Behälterunterteil 13 über der Vertiefung 17, an einer (nicht dargestellten) Tragkonstruktion abgestützt.

Die Vertiefung 17 weist einen erweiterten oberen Abschnitt 20 auf, in dem mehrere nach oben gerichtete und leicht nach innen geneigte Düsen 21 zum Besprühen des fluidisierten Katalysatorträgermaterials 23 angeordnet sind. An den oberen Randbereich 22 der Vertiefung 17 schließt sich nach unten hin eine zylindrische Wand 24 an; auf diese folgt weiter unten ein Umlenkbereich, der teilweise von einem höhenverstellbaren Verschlusskörper 25 gebildet wird. In einer mit gestrichelten Linien angedeutete Öffnungstellung des Verschlusskörpers kann nicht fluidisiertes Gut 26 durch am Innenrand der Vertiefung 17 entlang nach unten abfließen.

Durch den Behälteraufsatz 16 hindurch ist ein Zentralrohr 27 bogenförmig nach innen geführt, das sich dann axial im Behälter 10 nach unten erstreckt und kurz vor dem Boden der schüsselartigen Vertiefung 17 endet. Der maximale Bodenabstand entspricht etwa dem Radius des Zentralrohres 27. Zusammen mit dem zylindrischen Abschnitt 24 der Vertiefung 17 begrenzt das Zentralrohr einen zylindrischen Ringraum 28. Das äußere Ende des Zentralrohres 27 lässt sich an die Druckseite eines (nicht dargestellten) Gebläses anschließen das Luft oder ein anderes inertes Gas durch den Behälter 10 hindurchfördert

Innerhalb des Behälteroberteils 12 ist an dem Zentralrohr 27 ein ringförmiger Abweisschirm 29 mit einem Durchmesser D_{A} (hier als Breite des Rings zu verstehen) befestigt, dessen Rand in einer zur Behälterachse 11 senkrechten, im dargestellten Beispiel also waagrechten Ebene liegt. Zwischen dem Abweisschirm und der Innenwand des Behälters 10 bleibt eine ringförmige Öffnung 30 frei, so dass das Gas am Abweisschirm 30 vorbei nach oben in den Behälteraufsatz 16 strömen kann, der an der Saugseite eines (ebenfalls nicht dargestellten) Gebläses anschließbar.

Innerhalb des Behälterunterteils 13 ist konzentrisch zum Zentralrohr 27 ein Leitring 31 mittels mehrerer Rippen 32 am Zentralrohr 27 befestigt. Wahlweise kann der Leitring 31 auch an der Wand des Behälters 10 befestigt sein. Der Leitring 31 besitzt einen größeren Durchmesser als das Zentralrohr 27.

Vorzugsweise ist der Durchmesser des Zentralrohrs 27 gleich groß wie oder größer als der Durchmesser der schüsselartigen Vertiefung 17 im zylindrischen Teil 24.

In Figur 1 bezeichnet H1 den Abstand zwischen der Oberkante 34 des Leitrings 31 und der Behältermittelachse 37. Die Höhe H2 des Leitrings beträgt vorzugsweise zwischen einem Drittel bis zu zwei Drittel des Abstands H zwischen dem oberen Rand 22 der Vertiefung 17 und der Behältermittelachse 37 (mit *H* = *H1* + *H2* + *H3*). Zwischen dem unteren Rand 33 des Leitrings 31 und dem oberen Rand 22 der Vertiefung 17 bleibt ein ringförmiger erster Durchlass 34 mit lichter Höhe H3 frei, so dass das Schüttgut durch Schwerkraft in den Bereich der Düsen 21 und in den Bereich zwischen Leitring 31 und Zentralrohr 27 gelangen kann, wo es durch Fluidisierung aufwärts gefördert wird. Der Leitring kann in der Höhe verstellbar angeordnet sein. Der Abstand L zwischen der Wand des Zentralrohrs 27 und der Wand des Leitrings 31 ist dabei größer als die lichte Höhe H3 des ersten Durchlasses 34.

Außerdem bleibt zwischen dem oberen Rand 35 des Leitrings 31 und dem Abweisschirm 29 ein ringförmiger zweiter Durchlass 36 frei, in welchem der Förderstrom umgelenkt wird.

Der Behälter 10 enthält pulvriges, körniges oder geformtes Gut, das gemischt, getrocknet oder beschichtet oder einer Kombination zweier oder mehrerer dieser Vorgänge unterworfen wird. Das Gut 26 ist in der Abbildung im Zustand der nicht fluidisierten Schüttung dargestellt, während Gut 23 den fluidisierten Anteil des Guts darstellt.

Im Betrieb saugt das erwähnte Gebläse Luft oder ein inertes Gas in erwärmtem, trockenem Zustand im Sinne der Pfeile in Fig. 1 durch die dargestellte Apparatur hindurch, wobei im Innenraum des Behälters ein Druck unter Umgebungsdruck herrschen kann. Durch die Düsen 21 werden gleichzeitig oder abwechselnd feste, pulverförmige oder flüssige Stoffe eingesprüht. Diese Stoffe lagern sich an dem fluidisierten Gutanteil 23 an, ehe sie irgendeine Wand der Vorrichtung erreichen. Um die Anlagerung der eingesprühten Stoffe am Zentralrohr 27, dem Abweisschirm 29, dem Leitring 31 wie auch den Streben 32 zu minimieren, weisen diese Bauteile eine 5 mm dicke haftverringernde Schicht 38 aus Polytetrafluorethylen auf.

Besonders geeignet ist die erfindungsgemäße Vorrichtung für den Einsatz in Verfahren zur Beschichtung von Trägerkatalysatoren; beispielsweise für die Herstellung von Phthalsäureanhydrid. Herkömmliche Katalysatorträger sind als Kugeln, Zylinder, Ringe oder Säulen geformt; mit einer Korngröße (Durchmesser bzw. Länge) von 5 bis 15 mm. Gebräuchliche Materialien zur Herstellung der Träger sind Korund, Tonerde, Kieselgel oder auch Porzellan.

Zur Beschichtung wird die Schüttung der geformten Katalysatorträger mittels eines über das Tauchrohr 27 zugeführten Luftstroms, vorzugsweise mit einer Temperatur von 70 bis 130 °C, fluidisiert. Die aktiven Katalysatorkomponenten werden vorzugsweise in Lösung oder Suspension, insbesondere in wässriger Suspension, mittels der Düsen 21 auf die in Wirbelbewegung gehaltenen Katalysatorträger gesprüht, wobei beim Aufsprühen von wässrigen Suspensionen das Wasser beim Auftreffen sofort verdampft.

Die Erfindung wird durch die folgenden Beispiele näher veranschaulicht.

### Beispiel 1 (Einschalenkatalysator auf herkömmlichen Trägerringen zur PSA-Synthese)

47,44 kg Anatas (BET-Oberfläche 9 m²/g), 20,34 kg Anatas (BET-Oberfläche 20 m²/g), 5,32 kg Vanadiumpentoxid, 1,33 kg Antimonoxid, 0,30 kg Cäsiumcarbonat wurden in 195 l entionisiertem Wasser suspendiert und 18 Stunden gerührt, um eine homogene Verteilung zu erzielen. Zu dieser Suspension wurden 30,6 kg organischer Binder, bestehend aus einem Copolymer aus Vinylacetat und Vinyllaurat in Form einer 50 Gew.-%igen wässerigen Dispersion zugegeben.

In einer Fließbettapparatur gemäß Figur 1 mit einem Leitring, der einen Innendurchmesser von 500 mm und eine Höhe H2 = 205 mm besaß (H1 = 65 mm, H3 = 130 mm, H = 400 mm, L = 92,5 mm, D_{A} = 262,5 mm, D_{B} = 1000 mm), wurden 60 kg dieser Suspension auf 150 kg Steatit (Magnesiumsilikat) in Form von Ringen mit Abmessungen von 7 mm x 7 mm x 4 mm (Außendurchmesser x Höhe x Innendurchmesser) aufgesprüht und getrocknet. Dabei waren die Außenwand des Zentralrohrs 27 unterhalb des Abweisschirms 29 bis zu dem unteren Rand des Leitrings sowie die Streben 32 mit Polytetrafluorethylen (Teflon^{®}) beschichtet (Schichtdicke 5 mm).

Die Betriebsparameter waren:

| | |
|---|---|
| Zulufttemperatur: | 109°C |
| Ablufttemperatur: | 66°C |
| Dosierrate Suspension: | 2,25 kg /min |
| Luftdurchfluss: | 6000 m³/h |

Das Gewicht der aufgetragenen Schale betrug 8,0 % des Gesamtgewichtes des fertigen Katalysators. Die auf diese Weise aufgebrachte katalytisch aktive Masse, also die Katalysatorschale, enthielt nach einer Stunde Calcination bei 450°C 7,12 Gew.-% Vanadium (berechnet als V₂O₅), 1,8 Gew.-% Antimon (berechnet als Sb₂O₃), 0,33 Gew.-% Cäsium (berechnet als Cs), 90,75 Gew.-% Titandioxid. Die Schichtdicke wurde durch Analyse im Scanning Electron Microscope (SEM) gemessen. Die Proben wurden dafür in Harz eingebettet und mit einer Diamantsäge durchtrennt. Die Ringe waren homogen mit einer Schichtdicke von 70-100 µm beschichtet.

Diese gleichmäßige Beschichtung erhielt man auch bei 15 aufeinanderfolgenden Beschichtungsprozessen, zwischen denen keine Reinigung der Apparatur erforderlich war.

### Vergleichsbeispiel 2

Die Beschichtung des Katalysatorträgers erfolgte wie in Beispiel 1 beschrieben, wobei die Außenwand des Zentralrohrs 27 sowie die Streben 32 allerdings nicht mit Teflon beschichtet waren.

Nach 15 Beschichtungen wurde ein 1 bis 2 cm dicker Belag von Katalysatorpulver auf der Außenwand des Zentralrohrs festgestellt. Dieser Belag führte bereits zur Störungen der Luftströmung in der Nähe der Düse (21) (z. B. in dem Durchlass 34), so dass eine ungleichmäßige Beschichtung der Aktivmasse auf den Steatit-Ringen resultierte.

Daher ist bei der Vorrichtung des Beispiels 2 bereits nach 7-8 Beschichtungen eine intensive Reinigung der Fließbettapparatur erforderlich, was zeitaufwendig ist und zur Verringerung der Produktionskapazität führt.

### Beispiel 3

In einer Fließbettapparatur gemäß Beispiel 1, wobei der Leitring einen Innendurchmesser von 500 mm und eine Höhe H2 von 255 mm besaß (H3=80 mm), wurde die gleiche Suspension (60 kg) wie in Beispiel 1 auf 150 kg Steatit in Form von Ringen mit Abmessungen von 7 mm x 7 mm x 4 mm aufgesprüht und getrocknet. Der erhaltene Schalenkatalysator hatte die gleiche Zusammensetzung wie in Beispiel 1. Die Schichtdicke betrug 70-100 µm und war homogen.

Die Ergebnisse zeigen, dass die Aktivmasse gleichmäßig auf den Träger aufgebracht wurde. Außerdem wurde kein Belag in dem Coater gefunden.

### Beispiel 4 (Einschalenkatalysator auf größeren Trägerringen)

150 kg Steatit in Form von Ringen mit Abmessungen von 8 mm x 6 mm x 5 mm wurwurden in einer Fließbettapparatur gemäß Figur 1 mit einem Leitring, der einen Innendurchmesser von 530 mm und eine Höhe H2 von 255 mm besaß (H1 = 35 mm, H3 = 110 mm, L = 107,5 mm), erhitzt und mit einer Suspension aus 140,02 kg Anatas mit einer BET-Oberfläche von 21 m²/g, 11,776 kg Vanadiumpentoxid, 31,505 kg Oxalsäure, 5,153 kg Antimontrioxid, 0,868 kg Ammoniumhydrogenphosphat, 0,238 g Cäsiumsulfat, 215,637 kg Wasser und 44,808 kg Formamid, zusammen mit 33,75 kg eines organischen Binders, bestehend aus einem Copolymer von Acrylsäure/Maleinsäure (Gewichtsverhältnis 75:25) besprüht, bis das Gewicht der aufgetragenen Schicht 10,5 % des Gesamtgewichts des fertigen Katalysators betrug (nach einstündiger Wärmebehandlung bei 450 °C). Die auf diese Weise aufgebrachte katalytisch aktive Masse, also die Katalysatorschale, bestand im Mittel aus 0,15 Gew.-% Phosphor (berechnet als P), 7,5 Gew.-% Vanadium (berechnet als V₂O₅), 3,2 Gew.-% Antimon (berechnet als Sb₂O₃), 0,1 Gew.-% Cäsium (berechnet als Cs) und 89,05 Gew.-% Titandioxid.

Die Außenwand des Zentralrohrs (27) unterhalb des Abweisschirms (29) bis zu dem unteren Rand des Leitrings sowie die Streben (32) waren mit Teflon (Schichtdicke 5 mm) beschichtet.

**Betriebsparameter**

| | |
|---|---|
| Zulufttemperatur: | 97°C |
| Ablufttemperatur: | 67°C |
| Dosierrate Suspension: | 2,25 kg / min |
| Luftdurchfluss: | 6500 m³/h |

Die Ergebnisse zeigen, dass durch Optimierung der Dimension des Leitrings die homogene Beschichtung größerer Ringe (im Vergleich zu Beispiel 1) ermöglicht wurde: Die Aktivmasse wurde gleichmäßig auf den Träger aufgebracht. Die Schichtdicke betrug 100-200 µm. In der Fließbettapparatur wurde kein Belag festgestellt.

### Vergleichsbeispiel 5

Die Beschichtung des Katalysatorträgers erfolgte wie in Beispiel 4 beschrieben, wobei die Außenwand des Zentralrohrs 27 sowie die Streben 32 allerdings nicht mit Teflon beschichtet waren.

Nach 15 Beschichtungen wurde auch hier ein 1 bis 2 cm dicker Belag von Katalysatorpulver auf der Außenwand des Zentralrohrs gefunden, der zu inhomogenen Schichten des Schalenkatalysators führte.

### Vergleichsbeispiel 6

Die Beschichtung des Katalysatorträgers erfolgte wie in Beispiel 4 beschrieben, wobei ein Leitring mit einem Innendurchmesser von 500 mm und eine Höhe H2 von 205 mm eingebaut wurde(H1 = 65mm, H3 = 130 mm, L = 92,5 mm). Die gleiche Suspension wie in Beispiel 4 wurde auf 150 kg Steatit in Form von Ringen mit Abmessungen von 8 mm x 6 mm x 5 mm aufgesprüht und getrocknet. Der erhaltene Schalenkatalysator hat die gleiche Zusammensetzung wie in Beispiel 4.

Die Ergebnisse zeigen, dass die Aktivmasse nicht gleichmäßig auf den Träger aufgebracht wurde. Die Schichtdicke beträgt maximal ca. 100 µm. Außerdem wurden 10 bis 20 Gew.-% Abrieb gefunden.

### Beispiel 7

Die Beschichtung des Katalysatorträgers erfolgte wie in Beispiel 4 beschrieben, wobei der Leitring einen Innendurchmesser von 530 mm und eine Höhe H2 von 260 mm besaß (H1 = 40mm, H3 = 100 mm, L = 107,5 mm), wurde die gleiche Suspension wie in Beispiel 4 auf 150 kg Steatit in Form von Ringen mit Abmessungen von 8 mm x 6 mm x 5 mm aufgesprüht und getrocknet. Der erhaltene Schalenkatalysator hatte die gleiche Zusammensetzung wie in Beispiel 4.

Die Ergebnisse zeigen, dass die Aktivmasse gleichmäßig auf den Träger aufgebracht wurde. Die Schichtdicke betrug 100-200 µm. Außerdem wurde in der Fließbettapparatur kein Belag gefunden.

### Beispiel 8 (Einschalenkatalysator auf herkömmlichen Trägerringen zur MSA-Synthese)

In einem mit Stickstoff inertisierten, über Druckwasser außenbeheizbaren 8 m³-Stahl/Email-Rührkessel mit Strombrechern wurden 6,1 m³ Isobutanol vorgelegt. Nach Inbetriebnahme des dreistufigen Impellerrührers wurde das Isobutanol unter Rückfluß auf 90°C aufgeheizt. Bei dieser Temperatur wurde nun über die Förderschnecke mit der Zugabe von 736 kg Vanadiumpentoxid begonnen. Nachdem nach ca. 20 Minuten etwa 2/3 der gewünschten Menge an Vanadiumpentoxid zugegeben wurden, wurde bei weiterer Zugabe an Vanadiumpentoxid mit der Einpumpung von 900 kg 105%-iger Phosphorsäure begonnen. Zur Reinigung der Pumpe wurden weitere 0,2 m³ Isobutanol nachgepumpt. Anschließend wurde das Reaktionsgemisch unter Rückfluss auf etwa 100 bis 108°C erhitzt und unter diesen Bedingungen 14 Stunden belassen. Im Anschluss daran wurde die heiße Suspension in eine zuvor mit Stickstoff inertisierte und beheizte Druckfilternutsche abgelassen und bei einer Temperatur von etwa 100°C bei einem Druck oberhalb der Filternutsche von bis zu 0,35 MPa abs abfiltriert. Der Nutschkucken wurde durch stetiges Einleiten von Stickstoff bei 100°C und unter Rühren mit einem mittig angeordneten, in der Höhe verstellbaren Rührer innerhalb von etwa einer Stunde trockengeblasen. Nach dem Trockenblasen wurde auf ca. 155°C aufgeheizt und auf einen Druck von 15 kPa abs (150 mbar abs) evakuiert. Die Trocknung wurde bis zu einem Rest-Isobutanolgehalt von < 2 Gew.-% im getrockneten Katalysator-Precursor durchgeführt.

Anschließend wurde das getrocknete Pulver 2 Stunden unter Luft in einem Drehrohr mit einer Länge von 6,5 m, einem Innendurchmesser von 0,9 m und innenliegenden spiralförmigen Wendeln behandelt. Die Drehzahl des Drehrohres betrug 0,4 U/min. Das Pulver wurde in einer Menge von 60 kg/h in das Drehrohr gefördert. Die Luftzufuhr betrug 100 m³/h. Die direkt an der Außenseite des Drehrohrs gemessenen Temperaturen der fünf gleichlangen Heizzonen betrugen 250°C, 300°C, 340°C, 340°C und 340°C. Nach dem Abkühlen auf Raumtemperatur wurde der VPO-Precursor mit 1 Gew.-% Graphit innig vermischt und in einem Walzen-Kompaktor kompaktiert. Das Feingut im Kompaktat mit einer Partikelgröße < 400 µm wurde abgesiebt und erneut der Kompaktierung zugeführt. Das Grobgut mit einer Partikelgröße ≥ 400 µm wurde mit weiteren 2 Gew.-% Graphit vermischt und in einer Tablettiermaschine zu 5x3x2,5 mm Hohlzylindern (äußerer Durchmesser x Höhe x Durchmesser des inneren Lochs) mit einer Seitendruckfestigkeit von 11 N tablettiert. Um die erforderliche Menge an Katalysatorprecursor zu erhalten, wurden mehrere Ansätze durchgeführt.

Etwa 2,7 t der erhaltenen 5x3x2,5 mm Hohlzylindern wurden in einer Schütthöhe von 9 bis 10 cm kontinuierlich auf ein gasdurchlässiges Förderband einer Bandkalziniervorrichtung aus zwei hintereinandergeschalteten, identischen Bandkalzinierapparaten mit insgesamt acht Kalzinierzonen gegeben. Die ersten 1,4 t wurden zur einmaligen Einstellung der Betriebsparameter der Bandkalziniervorrichtung verwendet. Da sie kein einheitliches Material darstellten, wurden sie im Folgenden nicht weiter betrachtet.

Die Bandkalziniervorrichtung wurde bei Atmosphärendruck betrieben. Zwischen den Kalzinierzonen 4 und 5 befand sich eine umkapselte Übergangszone. Jede der acht Kalzinierzonen umfasste zur Erzeugung einer Gaszirkulation jeweils einen Ventilator. Jede der acht Kalzinierzonen wurde mit der gewünschten Menge an gewünschtem Frischgas versorgt. Zur Erhaltung des gewünschten Atmosphärendrucks wurde eine entsprechende Gasmenge abgeführt. Das Volumen des pro Zeiteinheit in jeder Kalzinierungszone zirkulierenden Gases war größer als das Volumen des pro Zeiteinheit zu-oder abgeführten Gases. Zwischen zwei aufeinanderfolgenden Kalzinierungszonen befand sich zur Verringerung des Gasaustausches jeweils eine Trennwand, welche im Bereich des Stromes des Katalysatorprecursors offen war. Die Länge jeder Kalzinierzone betrug 1,45 m. Die Geschwindigkeit des Förderbandes wurde entsprechend der gewünschten Verweilzeit von etwa 2 Stunden pro Kalzinierzone eingestellt. Die einzelnen Zonen wurden wie in Tabelle 1 dargestellt betrieben:

**Tabelle 1: Parameter zum Betrieb der Bandkalziniervorrichtung.**

| Zone | Temperatur | zugeführtes Frischgas |
|---|---|---|
| Kalzinierzone 1 | Aufheizen auf 250°C | Luft |
| Kalzinierzone 2 | Halten bei 250°C | Luft |
| Kalzinierzone 3 | Halten bei 250°C | Luft |
| Kalzinierzone 4 | Aufheizen auf 310°C | Luft |
| Übergangszone | Abkühlen auf 200°C | Luft |
| Kalzinierzone 5 | Aufheizen auf 425°C | N₂ |
| Kalzinierzone 6 | Halten bei 425°C | N₂/H₂O-Dampf (1:1) |
| Kalzinierzone 7 | Halten bei 425°C | N₂/H₂O-Dampf (1:1) |
| Kalzinierzone 8 | Abkühlen auf Raumtemperatur | N₂ |

Auf diese Weise wurden ca. 1,3 t fertiger Katalysator kontinuierlich hergestellt. Eine repräsentative Durchschnittsprobe dieses Katalysators wies folgende Daten auf:

| | |
|---|---|
| * mittlere Oxidationsstufe des Vanadiums (Vₒₓ): | 4,15 |
| * mittlere BET-Oberfläche (m²/g): | 25 |
| * Seitendruckfestigkeit (SDF): | 9,4 N |

150 kg des calcinierten Precursors wurden mit 3,8 l entionisierten Wasser versetzt. Dieser Suspension wurden 30,6 g Molybdän-Acetylacetonat zugesetzt. Die Suspension wurde über Nacht in einer Kugelmühle (6 Kugeln mit einem Durchmesser von 35 mm, 5 Kugeln mit einem Durchmesser von 30 mm und 2 Kugeln mit einem Durchmesser von 25 mm) gemahlen. Es erfolgte die Zugabe von 300 g Polyvinylacetat-Dispersion (Vinnapas-Dispersion LL8550, Feststoff-Gehalt 50 %). Es wurde weitere 30 min gemahlen. Die Suspension wurde in ein Glasgefäß überführt, und auf ca. 7,5 l aufgefüllt.

In einer Fließbettapparatur gemäß Figur 1 mit einem Leitring, der einen Innendurchmesser von 500 mm und eine Höhe von 205 mm besaß, wurden 150 kg Träger (Steatitringe der Firma Aluminagres der Geometrie 3.7 mm x 2.7 mm x 2.05 mm](Außendurchmesser x Höhe x Innendurchmesser) vorgelegt. Innerhalb von 3 Stunden wurde die Suspension auf die Trägerringe aufgesprüht und getrocknet. Der Anteil der Aktivmasse betrug 49,4 Gew.-% (bestimmt nach Abbrennen der organischen Komponenten bei 400°C in Luft).

Die Außenwand des Zentralrohrs (27) unterhalb des Abweisschirms (29) zu dem unteren Rand des Leitrings sowie die Streben (32) sind mit Teflon (Stärke von 5 mm) beschichtet (wie in Beispiel 1).

**Betriebsparameter:**

| | |
|---|---|
| Zulufttemperatur: | 109°C |
| Ablufttemperatur: | 66°C |
| Dosierrate: | 2,25 kg / min |
| Luftdurchfluss: | 6000 m³/h |

Die Ergebnisse zeigen, dass die Aktivmasse gleichmäßig auf den Träger aufgebracht wurde. Die Schichtdicke beträgt 600-750 µm und ist homogen auf den Ringen. Außerdem wurde in der Fließbettapparatur sowie auf die Außenwand des Zentralrohres bzw. der Streben kein Belag gefunden.

## Patentansprüche

1. Vorrichtung zum Mischen, Trocknen und Beschichten von pulvrigem, körnigem oder geformtem Schüttgut in einem Fliessbett mit
einem Behälter (10) zu Aufnahme des Schüttguts, wobei in einem unteren Bereich (13) des Behälters (10) eine schüsselartige Vertiefung (17) vorgesehen ist,
einem Zentralrohr (27) zur Zuführung eines Gases, wobei das Zentralrohr in einem oberen Bereich (12) des Behälters (10) in den Behälter eintritt, sich in dem Behälter (10) im wesentlichen axial nach unten erstreckt und in die Vertiefung (17) mündet,
einem im wesentlichen ringförmigen Abweisschirm (29), der in dem oberen Bereich (12) des Behälters (10) an dem Zentralrohr (27) befestigt ist,
einem in dem unteren Bereich (13) des Behälters (10) angeordneten Leitring (31), der das Zentralrohr (27) auf einem Teil seiner Länge im wesentlich konzentrisch mit einem Abstand (L) so umgibt, dass zwischen der Wand des Behälters (10) am oberen Rand (22) der Vertiefung und dem unteren Ende (33) des Leitrings (31) ein erster Durchlass (34) und zwischen dem Abweisschirm (29) und dem oberen Rand (35) des Leitrings (31) ein zweiter Durchlass (36) gebildet wird, und
Mitteln (21) zum Einleiten eines Fluids in den Behälter (10),
**dadurch gekennzeichnet, dass**
die Außenwand des Zentralrohrs (27) zumindest teilweise mit einer haftvermindernden Beschichtung (38) versehen ist.

2. Vorrichtung gemäß Anspruch 1, **dadurch gekennzeichnet, dass** die Außenwand des Zentralrohrs (27) unterhalb des Abweisschirms (29) mit der haftvermindernden Beschichtung (38) versehen ist.

3. Vorrichtung gemäß einem der Ansprüche 1 oder 2, **dadurch gekennzeichnet, dass** der Leitring (31) über Streben (32) an dem Zentralrohr (27) befestigt ist, wobei die Streben (32) mit der haftvermindernden Beschichtung (38) versehen sind.

4. Vorrichtung gemäß einem der Ansprüche 1 bis 3, **dadurch gekennzeichnet, dass** die Unterseite des Abweisschirms (29) und/oder der Innenmantel des Leitrings (31) mit der haftvermindernden Beschichtung (38) versehen sind.

5. Vorrichtung gemäß einem der Ansprüche 1 bis 4, **dadurch gekennzeichnet, dass** die haftvermindernde Beschichtung (38) ein Polymerisat eines fluorierten, vorzugsweise perfluorierten, ethylenisch ungesättigten Kohlenwasserstoffs ist.

6. Vorrichtung gemäß Anspruch 5, **dadurch gekennzeichnet, dass** die haftvermindernde Beschichtung (38) ein Fluorpolymer wie Polytetrafluorethylen ist.

7. Vorrichtung gemäß einem der Ansprüche 1 bis 6, **dadurch gekennzeichnet, dass** der Abstand (L) zwischen der Wand des Zentralrohrs (27) und der Wand des Leitrings (27) größer als die lichte Höhe (H3) des ersten Durchlasses (34) ist.

8. Vorrichtung gemäß einem der Ansprüche 1 bis 7, **dadurch gekennzeichnet, dass** der Abstand (L) zwischen der Wand des Zentralrohrs (27) und der Wand des Leitrings (31) weniger als 2/3 des Durchmessers (D_{A},), vorzugsweise weniger als die Hälfte des Durchmessers (D_{A}) des Abweisschirms (29) beträgt.

9. Vorrichtung gemäß einem der Ansprüche 7 oder 8, **dadurch gekennzeichnet, dass** der Abstand (L) größer ist, wenn Schüttgut (26) mit größeren Abmessungen verwendet wird.

10. Vorrichtung gemäß einem der Ansprüche 1 bis 9, **dadurch gekennzeichnet, dass** die Höhe (H2) des Leitrings (31) im Bereich von einem Drittel und zwei Dritteln des Abstands (H) zwischen dem oberen Rand (22) der Vertiefung (17) und der Behältermittelachse (37) liegt.

11. Vorrichtung gemäß einem der Ansprüche 1 bis 10, **dadurch gekennzeichnet, dass** der Durchmesser des Leitrings (31) im wesentlichen dem halben Behälterdurchmesser entspricht.

12. Verfahren zur Herstellung von Trägerkatalysatoren, wobei man die Katalysatorträger in einer Vorrichtung nach einem der Ansprüche 1-11 fluidisiert und durch Besprühen mit einer katalysatorhaltigen Suspension beschichtet.

## Claims

1. An apparatus for mixing, drying and coating pulverulent, granular or shaped loose material in a fluidized bed, which comprises
a container (10) for accommodating the loose material, with a bowl-like depression (17) being provided in a lower region (13) of the container (10),
a central tube (27) for introducing a gas, with the central tube entering the container in an upper region (12) of the container (10), extending essentially axially downward in the container (10) and opening into the depression (17),
an essentially annular deflection shield (29) which is fixed to the central tube (27) in the upper region (12) of the container (10),
a guide ring (31) which is located in the lower region (13) of the container (10) and surrounds the central tube (27) essentially concentrically at a distance (L) for part of its length so that a first opening (34) is formed between the wall of the container (10) at the upper edge (22) of the depression and the lower end (33) of the guide ring (31) and a second opening (36) is formed between the deflection shield (29) and the upper edge (35) of the guide ring (31), and
means (21) for introducing a fluid into the container(10),
wherein the outer wall of the central tube (27) is at least partly provided with an adhesion-reducing coating (38).

2. The apparatus according to claim 1, wherein the outer wall of the central tube (27) is provided with the adhesion-reducing coating (38) below the deflection shield (29).

3. The apparatus according to claim 1 or 2, wherein the guide ring (31) is fixed to the central tube (27) by means of struts (32) which are provided with the adhesion-reducing coating (38).

4. The apparatus according to any of claims 1 to 3, wherein the underside of the deflection shield (29) and/or the inside wall of the guide ring (31) are provided with the adhesion-reducing coating (38).

5. The apparatus according to any of claims 1 to 4, wherein the adhesion-reducing coating (38) is a polymer of a fluorinated, preferably perfluorinated, ethylenically unsaturated hydrocarbon.

6. The apparatus according to claim 5, wherein the adhesion-reducing coating (38) is a fluoropolymer such as polytetrafluoroethylene.

7. The apparatus according to any of claims 1 to 6, wherein the distance (L) between the wall of the central tube (27) and the wall of the guide ring (27) is greater than the open height (H3) of the first opening (34) .

8. The apparatus according to any of claims 1 to 7, wherein the distance (L) between the wall of the central tube (27) and the wall of the guide ring (31) is less than 2/3 of the diameter (D_{A}), preferably less than half the diameter (D_{A}), of the deflection shield (29).

9. The apparatus according to claim 7 or 8, wherein the distance (L) is greater when loose material (26) having larger dimensions is used.

10. The apparatus according to any of claims 1 to 9, wherein the height (H2) of the guide ring (31) is in the range from one third to two thirds of the distance (H) between the upper edge (22) of the depression (17) and the central axis (37) of the container.

11. The apparatus according to any of claims 1 to 10, wherein the diameter of the guide ring (31) corresponds essentially to half the diameter of the container.

12. A method of producing supported catalysts, which comprises fluidizing the catalyst supports in the apparatus according to any of claims 1 - 11 and coating them by spraying them with a catalyst-containing suspension.

## Revendications

1. Dispositif pour mélanger, sécher et enduire un produit en vrac pulvérulent, granuleux ou moulé dans un lit fluidisé, comportant
un récipient (10) pour recevoir le produit en vrac, un évidement en forme de cuve (17) étant prévu dans une zone inférieure (13) du récipient (10),
un tube central (27) pour amener un gaz, le tube central pénétrant dans le récipient dans une zone supérieure (12) du récipient (10), s'étendant sensiblement axialement vers le bas dans le récipient (10) et débouchant dans l'évidement (17),
un écran déflecteur (29) sensiblement annulaire qui est fixé dans la zone supérieure (12) du récipient (10) sur le tube central (27),
un anneau directeur (31) qui est agencé dans la zone inférieure (13) du récipient (10) et qui entoure le tube central (27) sur une partie de sa longueur d'une manière sensiblement concentrique avec une distance (L) de telle sorte que, entre la paroi du récipient (10) au bord supérieur (22) de l'évidement et l'extrémité inférieure (33) de l'anneau directeur (31), un premier passage (34) est formé et, entre l'écran déflecteur (29) et le bord supérieur (35) de l'anneau directeur (31), un deuxième passage (36) est formé, et
des moyens (21) pour introduire un fluide dans le récipient (10),
**caractérisé en ce que** la paroi externe du tube central (27) est au moins partiellement pourvue d'un recouvrement diminuant l'adhésion (38).

2. Dispositif suivant la revendication 1, **caractérisé en ce que** la paroi externe du tube central (27) est, en dessous de l'écran déflecteur (29), pourvue du recouvrement diminuant l'adhésion (38).

3. Dispositif suivant l'une des revendications 1 ou 2, **caractérisé en ce que** l'anneau directeur (31) est fixé sur le tube central (27) par l'intermédiaire d'étais (32), les étais (32) étant pourvus du recouvrement diminuant l'adhésion (38).

4. Dispositif suivant l'une des revendications 1 à 3, **caractérisé en ce que** la face inférieure de l'écran déflecteur (29) et/ou l'enveloppe interne de l'anneau directeur (31) sont pourvues du recouvrement diminuant l'adhésion (38).

5. Dispositif suivant l'une des revendications 1 à 4, **caractérisé en ce que** le recouvrement diminuant l'adhésion (38) est un polymère d'un hydrocarbure éthyléniquement insaturé, fluoré, de préférence perfluoré.

6. Dispositif suivant la revendication 5, **caractérisé en ce que** le recouvrement diminuant l'adhésion (38) est un polymère fluoré, tel que du polytétrafluoroéthylène.

7. Dispositif suivant l'une des revendications 1 à 6, **caractérisé en ce que** la distance (L) entre la paroi du tube central (27) et la paroi de l'anneau directeur (31) est plus grande que la hauteur libre (73) du premier passage (34).

8. Dispositif suivant l'une des revendications 1 à 7, **caractérisé en ce que** la distance (L) entre la paroi du tube central (27) et la paroi de l'anneau directeur (31) s'élève à moins des 2/3 du diamètre (D_{A}) de l'écran déflecteur (29), de préférence à moins de la moitié du diamètre (D_{A}).

9. Dispositif suivant l'une des revendications 7 ou 8, **caractérisé en ce que** la distance (L) est plus grande lorsqu'on utilise du produit en vrac (26) ayant des dimensions plus grandes.

10. Dispositif suivant l'une des revendications 1 à 9, **caractérisé en ce que** la hauteur (H2) de l'anneau directeur (31) est de l'ordre d'un tiers et de deux tiers de la distance (H) entre le bord supérieur (22) de l'évidement (17) et l'axe médian du récipient (37)

11. Dispositif suivant l'une des revendications 1 à 10, **caractérisé en ce que** le diamètre de l'anneau directeur (31) correspond sensiblement à la moitié du diamètre du récipient.

12. Procédé de préparation de catalyseurs sur support dans lequel le support de catalyseur est fluidisé dans un dispositif suivant l'une des revendications 1 à 11 et est, par aspersion, enduit d'une suspension contenant du catalyseur.
